# EUROPEAN PATENT APPLICATION

(11) **EP 2 713 279 A1**
(43) Date of publication of application: **02.04.2014**
(21) Application number: 12807384.8
(22) Date of filing: 26.06.2012
(51) Int. Cl.: G06F 13/00, G06F 9/445, H04Q 9/00

(54) **COMMUNICATION NETWORK SYSTEM, COMMUNICATION METHOD AND INFORMATION PROCESSING DEVICE**

(30) Priority: 01.07.2011 JP 2011147698
(71) Applicant: NEC Corporation, Tokyo 108-8001 (JP)
(72) Inventor: YOSHIDA, Yuuichiro, Tokyo 108-8001 (JP)
(74) Representative: Betten & Resch
(86) International application number: PCT/JP2012/004114
(87) International publication number: WO 2013/005387

(57) **Abstract**

A communication network system is provided and it includes: a device administration unit that is connected to at least one device in a communicable fashion; a device information storage unit that receives device information about the device from the device administration unit through a network and stores the device information; an application delivery unit that delivers an application, which issues an instruction for operating the device, to the device administration unit through the network on the basis of a request from the device administration unit; and an instruction transceiver unit that receives the instruction for operating the device from a communication unit through the network, and transmits the instruction to the device administration unit. The instruction transmission reception unit determines the vice administration unit transmitting the instruction for operating the device, on the basis of the device information acquired from the device information storage unit, and information about the device administration unit that is a delivery destination of the application acquired from the application delivery unit.

## Description

### TECHNICAL FIELD

The present invention relates to a communication network technique.

### BACKGROUND ART

Nowadays, due to improvement in living standards and concerns about environmental issues, there is an increase in opportunities to use various devices such as home appliances, sensors, and the like in the home. Recently, there has also been an increase in the number of homes in which a gateway device is installed in order to efficiently use various home devices, but the gateway device has not yet come into widespread use. One of the reasons is a matter of security, that is, one of the reasons is that the gateway device contains data acquired from various home devices. Further, in a case where various devices are remotely controlled by connecting from outside, there are a lot of methods of directly accessing the home gateway device from the outside through a network. Accordingly, from the viewpoint of security, there is a demand for a structure capable of more securely providing services using various devices.

Under this situation, as disclosed in Patent Document 1, there is known a technique of providing a security function of the home network side to a server apparatus of a service provider, without providing a heavy security function to the gateway device and requesting a user to perform professional administration. As disclosed in Patent Document 2, there is known a technique for a network security function capable of preventing unauthorized access, which can be administered by a user, by providing a function of setting authentication levels and authentication methods in each function of home appliances when remotely controlling home appliances connected to the network.

### RELATED DOCUMENT

### PATENT DOCUMENT

[Patent Document 1] Japanese Unexamined Patent Application Publication No. 2002-77274
[Patent Document 2] Japanese Unexamined Patent Application Publication No. 2004-96591

### DISCLOSURE OF THE INVENTION

However, in the techniques of the related art, a communication terminal is directly connected to the gateway device, or service software for using the devices is integrated into the gateway device. Thus, the security of the gateway device is not sufficient. Hence, there is a demand to improve security of the gateway.

An object of the present invention is to provide a technique capable of solving the above-mentioned problem.

According to an aspect of the invention, there is provided a communication network system including:
a device administration unit that is connected to at least one device in a communicable fashion;
a device information storage unit that receives device information on the device from the device administration unit through a network and stores the device information;
an application delivery unit that delivers an application, which issues an instruction for operating the device, to the device administration unit through the network on the basis of a request from the device administration unit; and
an instruction transceiver unit that receives the instruction for operating the device from a communication unit through the network, and transmits the instruction to the device administration unit,
wherein the instruction transceiver unit determines the device to which the operation instruction is transmitted, on the basis of the device information acquired from the device information storage unit,
wherein the instruction transceiver unit determines the device administration unit that transmits the instruction for operating the device, on the basis of information about the device administration unit that is a delivery destination of the application acquired from the application delivery unit,
wherein the instruction transceiver unit transmits the operation instruction to the application delivered to the determined device administration unit, and
wherein the application delivered to the determined device administration unit that receives the operation instruction operates the determined device on the basis of the operation instruction.

According to another aspect of the invention, in order to achieve the above-mentioned object, there is provided a communication method comprising:
a device administration step that is connected to at least one device in a communicable fashion;
an application delivery step that receives device information about the device, and delivering an application which issues an instruction for operating the device; and
an instruction transceiver step that receives the instruction for operating the device from a communication unit, and transmits the instruction for operating the device on the basis of the device information and the information about a delivery destination of the application.

According to still another aspect of the invention, in order to achieve the above-mentioned object, there is provided an information processing apparatus comprising:
an instruction reception unit that receives an instruction for operating a device from a communication unit through a network;
a device information reception unit that receives the device information from a device information storage unit that stores device information on the device; and
an application delivery information reception unit that receives from an application delivery unit application delivery information that indicates an application, which issues the instruction for operating the device, has been delivered to a device administration unit administering the device,
wherein the instruction for operating the device is transmitted to the device administration unit on the basis of the instruction, the device information, and the application delivery information.

In this case, by integrating an application for using a device into an application server, it is possible to improve security of the gateway device.

### BRIEF DESCRIPTION OF THE DRAWING

The above-mentioned object, and the other objects, the characteristics, and the advantage are further described in detail with reference to preferred exemplary embodiments to be described later and the following accompanying drawings.

FIG. 1 is a block diagram illustrating a configuration of a communication network system according to a first exemplary embodiment of the present invention.
FIG. 2 is a block diagram illustrating a configuration of a communication network system according to a second exemplary embodiment of the present invention.
FIG. 3 is a flowchart illustrating a processing flow of a procedure for connecting devices in a communication network system according to a second exemplary embodiment of the present invention.
FIG. 4 is a flowchart illustrating a processing flow of a gateway device in the communication network system according to the second exemplary embodiment of the present invention.
FIG. 5 is a flowchart illustrating a processing flow of an application delivery unit in the communication network system according to the second exemplary embodiment of the present invention.
FIG. 6 is a flowchart illustrating a processing flow of an instruction transceiver unit in the communication network system according to the second exemplary embodiment of the present invention.
FIG. 7 is a flowchart illustrating a processing flow of a device information storage unit in the communication network system according to the second exemplary embodiment of the present invention.
FIG. 8 is a flowchart illustrating a processing flow of each component in the communication network system according to the second exemplary embodiment of the present invention.
FIG. 9 is a flowchart illustrating a processing flow of a communication terminal in the communication network system according to the second exemplary embodiment of the present invention.
FIG. 10 is a flowchart illustrating a processing flow of an application in the communication network system according to the second exemplary embodiment of the present invention.
FIG. 11 is a flowchart illustrating a processing flow of a gateway device in the communication network system according to the second exemplary embodiment of the present invention.
FIG. 12 is a flowchart illustrating a processing flow of a device in the communication network system according to the second exemplary embodiment of the present invention.
FIG. 13 is a diagram illustrating a table of device information in the communication network system according to the second exemplary embodiment of the present invention.
FIG. 14 is a diagram illustrating a table of device and address/ID information in the communication network system according to the second exemplary embodiment of the present invention.
FIG. 15 is a diagram illustrating a table of information, which associates the gateway devices with the applications, in the communication network system according to the second exemplary embodiment of the present invention.
FIG. 16 is a diagram illustrating a hardware configuration of an information processing device in the communication network system according to the second exemplary embodiment of the present invention.
FIG. 17 is a block diagram illustrating a configuration of a communication network system according to a third exemplary embodiment of the present invention.
FIG. 18 is a flowchart illustrating a processing flow of each component when the device is connected to the gateway device in the communication network system according to the third exemplary embodiment of the present invention.
FIG. 19 is a flowchart illustrating a processing flow of an operation of a device performed by the information processing device according to the third exemplary embodiment of the present invention.

### DESCRIPTION OF EMBODIMENTS

Hereinafter, exemplary embodiment for carrying out the present invention will be described in detail with reference to the accompanying drawings. However, the configurations, the numerical values, the processing flows, the function elements, and the like described in the following embodiments are just examples. Accordingly, variations and modifications thereof may be made without restriction, and the technical scope of the present invention is not intended to be limited to the following description.

### [First Exemplary Embodiment]

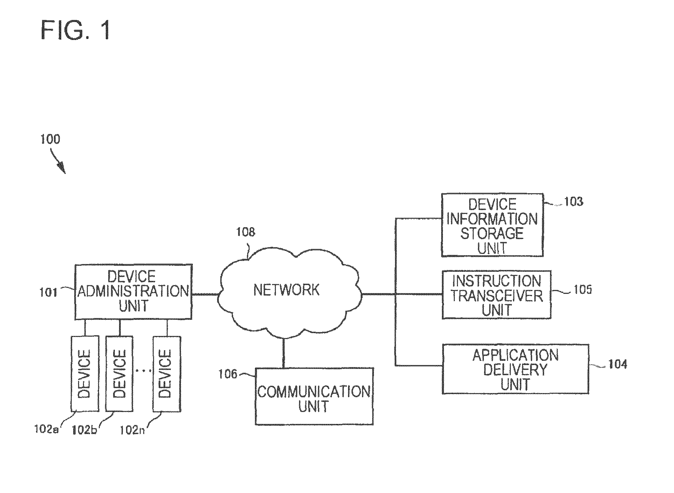

A communication network system 100 as a first embodiment of the present invention will be described with reference to FIG. 1.

As shown in FIG. 1, the communication network system 100 includes a device administration unit 101, devices 102a to 102n, a device information storage unit 103, an application delivery unit 104, an instruction transceiver unit 105, and a communication unit 106. In addition, the device administration unit 101 is connected to the device information storage unit 103, the application delivery unit 104, and the instruction transceiver unit 105 through a network 108 so as to be able to communicate therewith. Further, the instruction transceiver unit 105 is connected to the communication unit 106 through the network 108 so as to be able to communicate therewith.

The device administration unit 101 is connected to at least one of the devices 102a to 102n so as to be able to communicate therewith. The device information storage unit 103 receives device information about the devices 102a to 102n from the device administration unit 101, and stores the information. The application delivery unit 104 delivers an application, which issues an instruction for operating the devices 102a to 102n, to the device administration unit 101, on the basis of the request of the device administration unit 101, through the network 108. Examples of the devices 102a to device 102n include a temperature sensor in an air conditioner and the like.

In the present exemplary embodiment, a description will be given of the processing flow of each unit when operating the device 102a. The instruction transceiver unit 105 receives an operation instruction for operating the device 102a from the communication unit 106 through the network 108. Next, the instruction transceiver unit 105 receives the device information of the device 102a from the device information storage unit 103 on the basis of the operation instruction, and determines the device administration unit 101 which administers the device 102a. Then, the instruction transceiver unit 105 transmits the operation instruction to the device administration unit 101. Furthermore, the device administration unit 101 operates the device 102a in accordance to the received operation instruction.

With the above-mentioned configuration and operations, in the communication network system of the present exemplary embodiment, the applications for using the devices are integrated into an application server, thereby improving security of the gateway device.

### [Second Exemplary Embodiment]

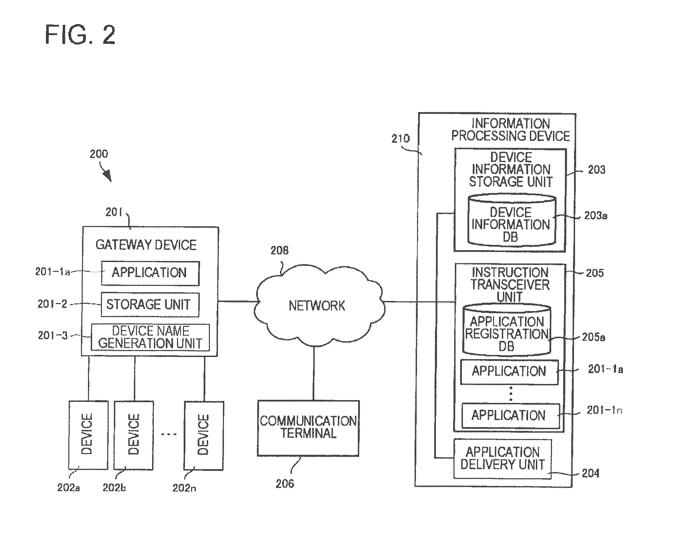

Next, a communication network system 200 as a second exemplary embodiment of the present invention will be described with reference to FIG. 2. FIG. 2 is a diagram illustrating a configuration of the communication network system 200 according to the present exemplary embodiment.

The communication network system 200 includes a gateway device 201, devices 202a to 202n, and an information processing device 210. In addition, a function of the device administration unit 101 in Exemplary Embodiment 1 is implemented with, for example, the gateway device 201 in the present exemplary embodiment. Functions of the other components in Exemplary Embodiment 1 are implemented with, for example, the components having the same names in the present exemplary embodiment.

The information processing device 210 includes a device information storage unit 203, an application delivery unit 204, and an instruction transceiver unit 205. The gateway device 201, the information processing device 210, and a communication terminal 206 are connected through a network 208 so as to be able to communicate with each other.

The gateway device 201 has applications 201-1a to 201-1n, a storage unit 201-2, and a device name generation unit 201-3. However, the gateway device 201 does not hold the applications 201-1a to 201-1n until the applications are delivered from the application delivery unit. In the description of the present exemplary embodiment, the device information storage unit 203, the application delivery unit 204, and the instruction transceiver unit 205 are provided in the information processing device 210. However, each unit may be separately provided in a different information processing device.

The device information storage unit 203 has a device information DB 203a. Then, the instruction transceiver unit 205 includes an application registration DB 205a and applications 201-1a to 201-1n.

### (Operation of Devices)

Setting of each unit for using the devices 202a to 202n will be described.

The gateway device 201 is connected to at least one of the devices 202a to 202n so as to be able to communicate therewith. Then, the gateway device 201 acquires an address/ID information and a device name, and stores those in the storage unit 201-2, when the devices 202a to 202n has been connected to the gateway device 201.

The gateway device 201 retrieves applications 201-1a to 201-1n capable of using the devices 202a to 202n from the application information list corresponding to the respective devices on the basis of the device information, which list is stored in the storage unit 201-2 in advance. Then, the gateway device 201 requests the application delivery unit 204 to deliver the usable applications on the basis of the retrieval result, and accepts the delivery. For example, sensor monitoring software, which is used to issue an instruction to operate a temperature sensor, is retrieved on the basis of the device information received from the device (the temperature sensor), and the delivery is requested to the application delivery unit 204.

The gateway device 201 transmits to the device information storage unit 203 the address/ID information of the devices 202a to 202n and the device names generated by the device name generation unit 201-3, through the network 208.

The device information storage unit 203 associates with each other the address/ID information of the devices 202a to 202n, the device names, and the information of the gateway device (device information) received from the gateway device 201, and stores these in the device information DB 203a. In the present exemplary embodiment, although the device information includes the device names, the address/ID information of the devices, and the information of the gateway device which administers the devices, the device information is not limited to those.

The device information storage unit 203 receives the transmission request of the address/ID information of the devices 202a to 202n from the instruction transceiver unit 205. Further, the device information storage unit 203 receives the applications 201-1a to 201-1n, which issue operation instructions to the devices 202a to 202n, and the information of the gateway device 201, which administers the devices 202a to 202n, from the instruction transceiver unit 205. Then, on the basis of these pieces of information, the address/ID information, which is set in the devices 202a to 202n, is retrieved from the device information DB 203a, and the retrieval result is transmitted to the instruction transceiver unit 205.

The instruction transceiver unit 205 issues a request for transmitting the address/ID information of the devices on the basis of the names of the devices which receive the operation instructions from the communication terminal 206. Hence, the device information storage unit 203 can determine the device based on the device name and transmit the address/ID information to the instruction transceiver unit 205, even when the address/ID information stored in the device information DB 203a is modified.

The application delivery unit 204 delivers the applications 201-1a to 201-1n, which issue instructions for operating the devices 202a to 202n, to the gateway device 201, on the basis of the delivery request from the gateway device 201. Further, the application delivery unit 204 transmits to the instruction transceiver unit 205 the applications and the information of the gateway device 201 to which the applications are delivered (application delivery information), as application delivery information of the delivery destinations of the applications 201-1a to 201-1n.

The instruction transceiver unit 205 receives the instructions for operating the devices 202a to 202n from the communication terminal 206. Further, the instruction transceiver unit 205 receives from the communication terminal 206 the applications 201-1a to 201-1n and the information (gateway device information) of the gateway device 201 administering the devices 202a to 202n that uses the applications, and stores those.

The instruction transceiver unit 205 receives the application delivery information from the application delivery unit 204, associates various pieces of received information, and registers these in the application registration DB 205a. Specifically, the device names, the applications issuing the operation instructions to operate the devices, and the number for the gateway device administering the devices are associated with each other and registered. Furthermore, the instruction transceiver unit 205 transmits the stored gateway device information (the applications issuing the operation instructions to the devices and the information of the gateway device administering the devices) to the device information storage unit 203.

The applications, which are stored in the instruction transceiver unit 205, retrieve the application information, which is stored in the application registration DB 205a, on the basis of the operation instructions from the communication terminal 206 to the devices and the information of the gateway device administering the devices. Then, the applications confirm whether the applications are delivered from the application delivery unit 204 to the gateway device 201, which administer the devices of targets of the operation instructions from the communication terminal 206.

The applications 201-1a to 201-1n confirm that the applications are delivered to the gateway device 201 administering the target devices of the operation instruction, and then request the device information storage unit 203 for transmitting the address/ID information of the devices 202a to 202n. At this time, the applications 201-1a to 201-1n transmit gateway device information to the device information storage unit 203.

The applications 201-1a to 201-1n determine the gateway device 201 that transmits the operation instructions issued to the devices, on the basis of the information of the gateway device 201 that is the delivery destination of the application. The applications 201-1a to 201-1n try to connect to the gateway device 201 administering the determined devices 202a to 202n. The applications 201-1a to 201-1n transmit to the determined gateway device 201 the instructions for operating the devices 202a to 202n received from the communication terminal 206.

The gateway device 201 receives the operation instruction that is from the instruction transceiver unit 205 to operate the device 202a, using the application 201-1a that is delivered from the application delivery unit 204. The gateway device 201 receives the address/ID information from each device and stores the information in the storage unit 201-2 when accepting connection from the devices 202a to 202n before receiving the operation instruction of the device from the instruction transceiver unit 205. The gateway device 201 transmits the address/ID information of the devices and the like to the application delivery unit 204, and accepts the delivery of the applications 201-1a to 201-1n performing the operation instructions on the devices 202a to 202n, from the application delivery unit 204 in advance. The gateway device 201 makes connections to the devices 202a to 202n of the operation instruction targets and issues the operation instruction, by using the applications 201-1a to 201-1n that are delivered thereto.

The devices 202a to 202n execute operations in response to the operation instructions that they receive from the applications 201-1a to 201-1n. Then, the devices 202a to 202n transmit messages to the gateway device 201 when there is a necessity to send messages to the gateway device 201 due to the operation execution.

### (Operation of Each Unit for Device Operation)

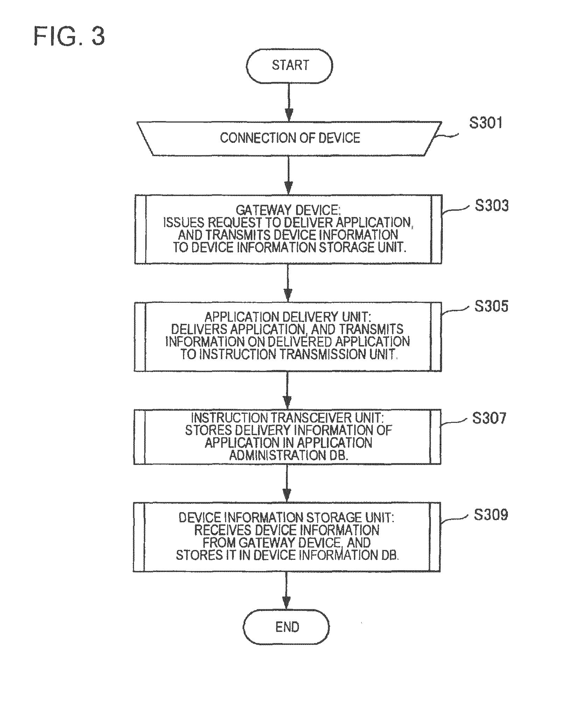

Operations for using the devices in a case of connecting the devices 202a to 202n to respective components will be described with reference to FIGS. 3 to 12. FIG. 3 is a flowchart illustrating a processing flow of a procedure for connecting the devices 202a to 202n. Note that, FIGS. 3 to 12 show cases where the device 202a and the application 201-1a are selected.

In step S301, the device 202a is connected to the gateway device 201.

In step S303, the device name generation unit generates a device name of the device 202a on the basis of the information that it receives from the device 202a. Next, the gateway device 201 requests the application delivery unit 204 for delivering the application 201-1a on the basis of the information that it receives from the connected device 202a. Then, the device information (the address/ID information, the device name, the information of the gateway device administering the devices) of the connected device 202a is transmitted to the device information storage unit 203.

In step S305, the application delivery unit 204 delivers the application 201-1a to the gateway device 201. Further, the application delivery unit 204 transmits the application delivery information (information of the application and the gateway device to which the application is delivered) to the instruction transceiver unit 205.

In step S307, the instruction transceiver unit 205 receives the application delivery information from the application delivery unit 204, and stores the information in the application registration DB 205a. In step S309, the device information storage unit 203 receives the device information from the gateway device 201, and stores the information in the device information DB 203a.

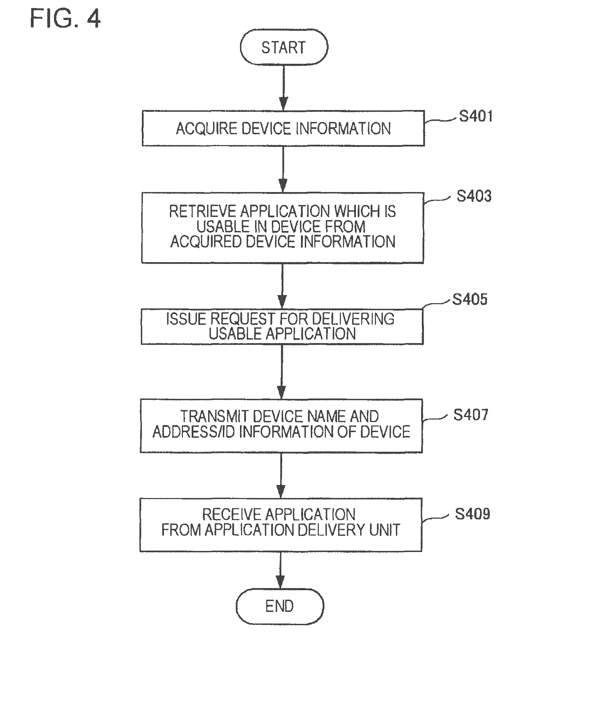

FIG. 4 is a flowchart illustrating a processing flow of the gateway device 201 according to the present exemplary embodiment.

In step S401, the gateway device 201 acquires address/ID information of each device when the device 202a is connected. Further, the device name generation unit generates a device name on the basis of the acquired device information. In step S403, the application 201-1a, which is used to operate the device 202a, is retrieved from a table that indicates association between the devices and applications received from the application delivery unit 204 in advance, by using the acquired information of the device.

In step S405, the gateway device 201 requests the application delivery unit 204 to deliver the retrieved application 201-1a. In step S407, the address/ID information of the device 202a, the device name generated in the device name generation unit 201-3, and the information of the gateway device 201 are transmitted to the device information storage unit 203. In step S409, the gateway device 201 receives the application 201-1a delivered from the application delivery unit 204.

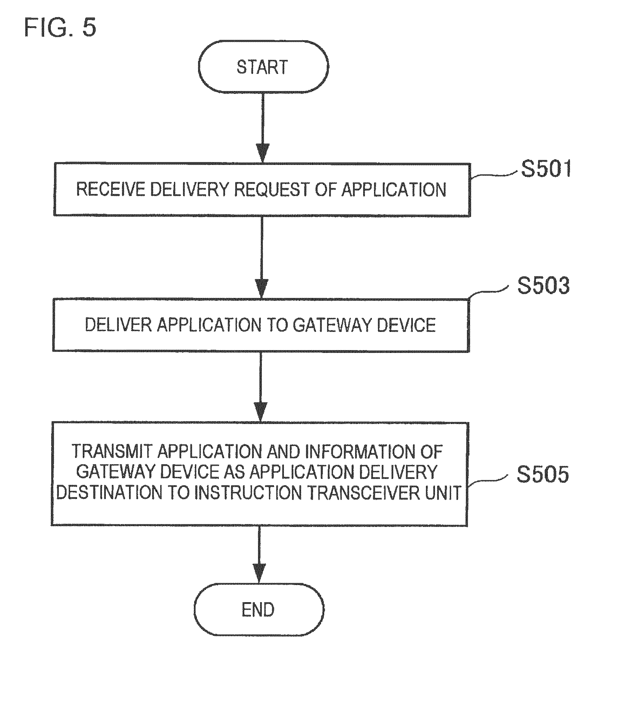

FIG. 5 is a flowchart illustrating a processing flow of the application delivery unit 204 according to the present exemplary embodiment.

In step S501, the application delivery unit 204 receives from the gateway device 201 a request for delivering the application 201-1a to the gateway device 201. In step S503, the application delivery unit 204 delivers the application 201-1a, which is requested for delivering, to the gateway device 201. In step S505, the application delivery unit 204 transmits to the instruction transceiver unit 205 the application delivery information (the device name, the application, and the information of the gateway device to which the application is delivered).

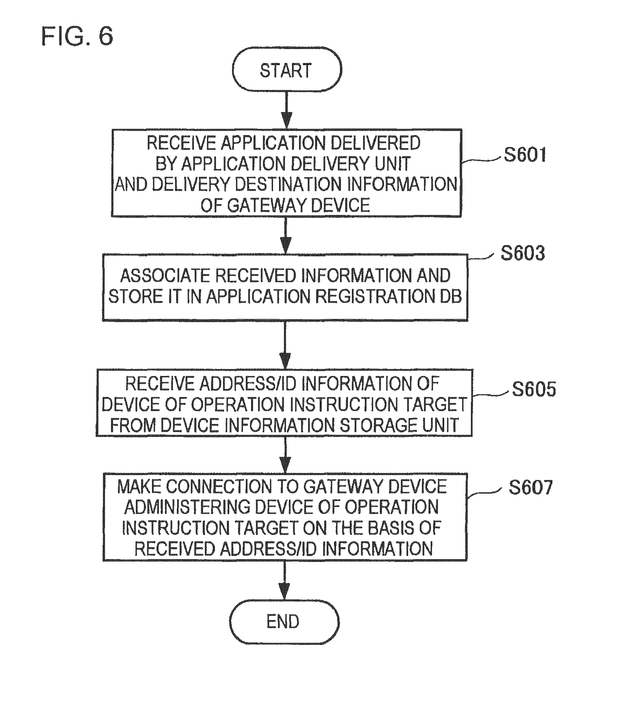

FIG. 6 is flowchart illustrating a processing flow of the instruction transceiver unit 205 according to the present exemplary embodiment.

In step S601, the instruction transceiver unit 205 receives the application delivery information (the device name, the application, and the information of the gateway device to which the application is delivered) from the application delivery unit 204. In step S603, the application 201-1a and the information of the gateway device 201 to which the application is delivered are associated, and are stored in the application registration DB 205a.

Thereafter, the instruction transceiver unit 205 receives the operation instruction for the device 202a from the communication terminal 206, and in step S605, receives the address/ID information of the device 202a, which is a target of the operation instruction, from the device information storage unit 203. In step S607, on the basis of the received address/ID information of the device 202a, the instruction transceiver unit 205 makes connection to the gateway device 201 administering the device 202a that receives the operation instruction, by using the application 201-1a which is running on the instruction transceiver unit 205.

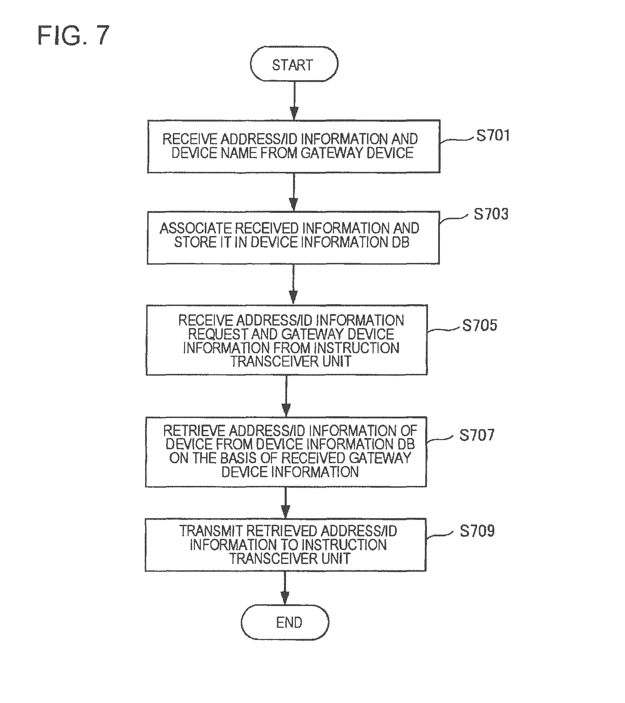

FIG. 7 is a flowchart illustrating a processing flow of a procedure of the device information storage unit 203 according to the present exemplary embodiment.

In step S701, the device information storage unit 203 receives the device information (the address/ID information, the device name, and the information of the gateway device administering the devices) from the gateway device 201. In S703, the device information storage unit 203 associates the pieces of device information received from the gateway device 201, and stores the information in the device information DB 203a.

In step S705, the device information storage unit 203 receives from the instruction transceiver unit 205 the application 201-1a, which issues an operation instruction of the device 202a, and the information (gateway device information) of the gateway device for administering the device. In step S707, the device information storage unit 203 retrieves the address/ID information of the device 202a being a target of the operation instruction from the device information DB 203a, on the basis of the information of the gateway device for administering the device included in the gateway device information. In step S709, the device information storage unit 203 transmits the address/ID information, which is retrieved from the device information DB 203a, to the instruction transceiver unit 205.

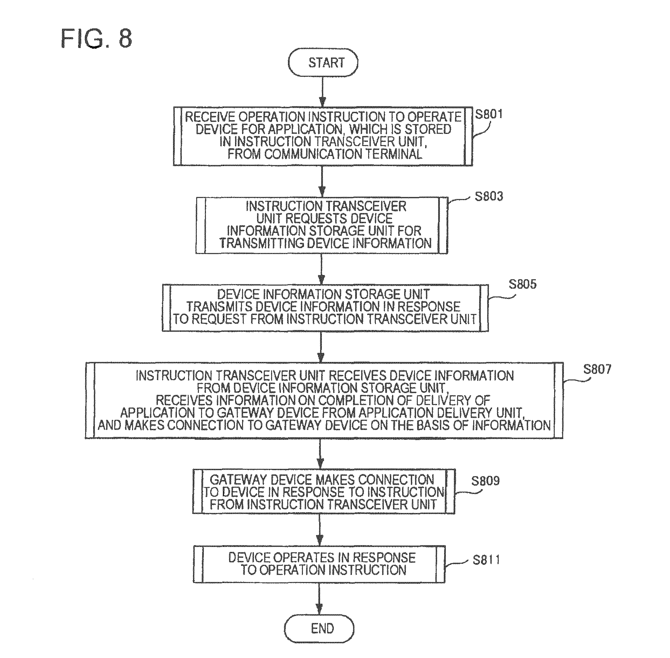

FIG. 8 is a flowchart illustrating a processing flow of each unit for using the device.

In step S801, the instruction transceiver unit 205 receives the operation instruction for operating the device 202a from the communication terminal 206, for the application 201-1a stored in the instruction transceiver unit 205. Next, in step S803, the instruction transceiver unit 205 requests the device information storage unit 203 for transmitting the device information of the device 202a when receiving the operation instruction for operating the device 202a.

In step S805, the device information storage unit 203 retrieves the device information corresponding to the device 202a from the device information DB 203a in response to the transmission request from the instruction transceiver unit 205, and transmits the information to the instruction transceiver unit 205. In step S807, the instruction transceiver unit 205 receives the device information retrieved from the device information storage unit 203. Next, the application DB 205a is searched, and it is confirmed that the application 201-1a for operating the device 202a is delivered to the gateway device 201 in advance. When the delivery of the application 201-1a is completed, on the basis of the device information of the device 202a, the application 201-1a running on the instruction transceiver unit 205 connects to the application 201-1a delivered to the gateway device 201. When the delivery of the application 201-1a to the gateway device 201 is not completed, the instruction transceiver unit 205 waits for the detection of the completion of the delivery. As the detection method, for example, there is a method of confirming the delivery information of the application 201-1a by searching the application DB 205a again after a predetermined time has passed.

In step S809, the gateway device 201 makes connection to the device 202a in response to the operation instruction from the application 201-1a stored in the instruction transceiver unit 205 and issues the operation instruction. In step S811, the device 202a executes an operation in response to the operation instruction received from the application 201-1a that is delivered to the gateway device 201.

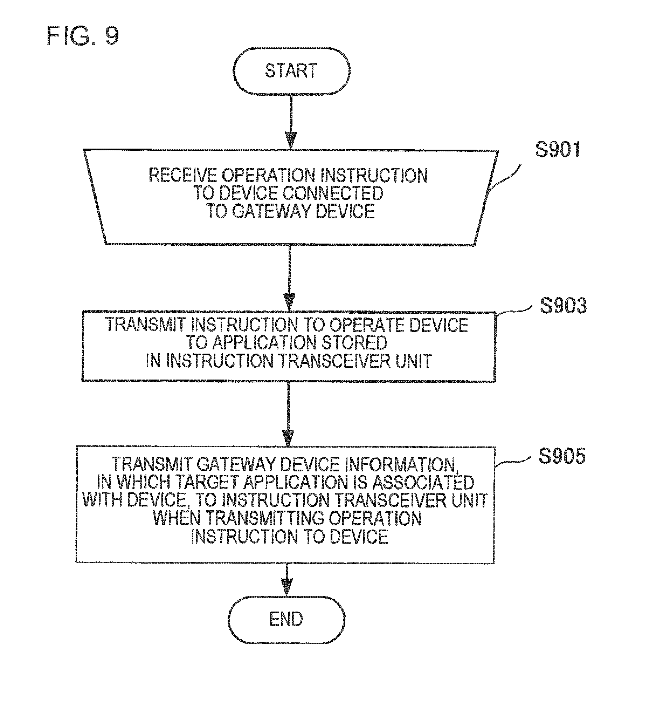

FIG. 9 is a flowchart illustrating a processing flow of the communication terminal 206.

In step S901, the communication terminal 206 receives the operation instruction to operate the device 202a from a user. In step S903, the communication terminal 206 transmits an instruction for operating the device 202a to the application 201-1a which is stored in the application registration DB 205a of the instruction transceiver unit 205. The instruction for operating the device 202a contains, for example, the device name and the operation content. The operation content is, for example, that the temperature setting is increased by one degree, in a case where the device 202a is a temperature sensor of an air conditioner. In step S905, the communication terminal 206 further transmits the gateway device information in which the application 201-1a is associated with the device 202a.

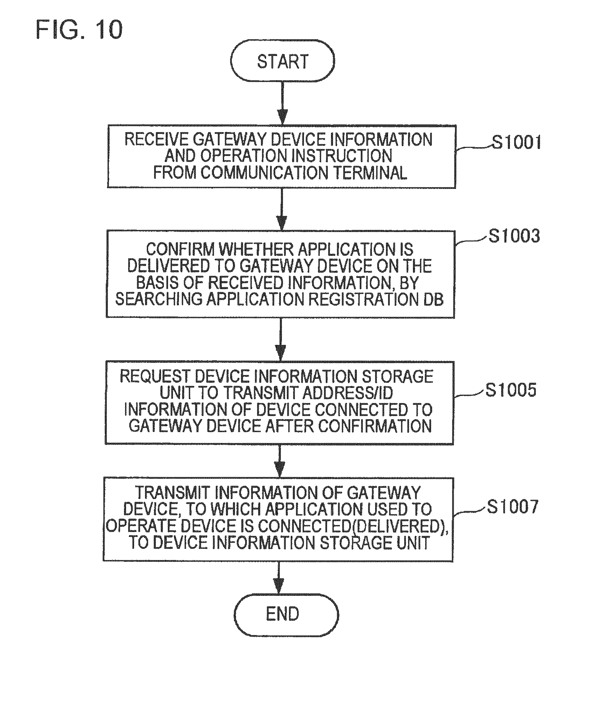

FIG. 10 is a flowchart illustrating a processing flow of the application 201-1a which is stored in the instruction transceiver unit 205.

In step S1001, the instruction transceiver unit 205 receives the gateway device information and the instruction for operating the device 202a, which are transmitted from the communication terminal 206. Then, on the basis of the operation instruction and the gateway device information, the application 201-1a operating the device 202a, is determined, and the application 201-1a is activated. In step S1003, the application 201-1a activated in step S1001 searches the application registration DB 205a in order to confirm whether or not the application 201-1a is delivered to the gateway device 201 on the basis of the gateway device information.

In step S1005, the application 201-1a running on the instruction transceiver unit 205 searches the application registration DB 205a, and then requests the device information storage unit 203 for transmitting the address/ID information of the device 202a connected to the gateway device 201. In step S1007, the application 201-1an running on the instruction transceiver unit 205 transmits to the device information storage unit 203 the information of the gateway device that is connected in order to issue the operation instruction to the device 202a.

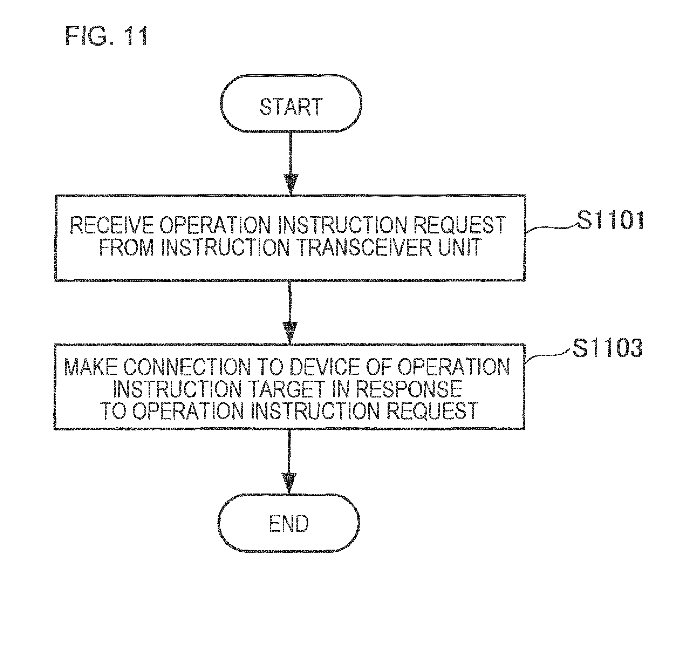

FIG. 11 is a flowchart illustrating a processing flow of the gateway device 201.

In step S1101, the gateway device 201 receives the instruction that is for operating the device 202a and is transmitted from the instruction transceiver unit 205. In step S1103, in response to the instruction for operating the device 202a received from the communication terminal 206, connection to the device 202a being a target of the operation instruction is made.

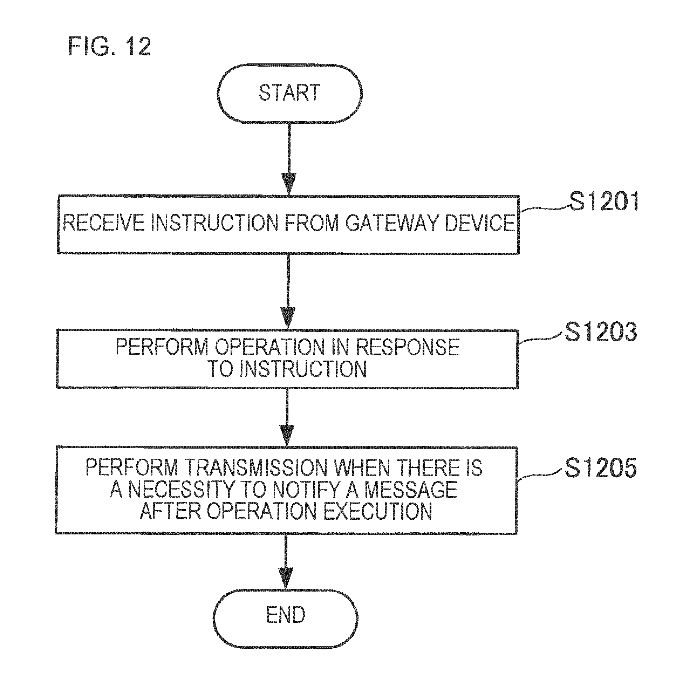

FIG. 12 is a flowchart illustrating a processing flow of the device 202a.

In step S1201, the device 202a receives the operation instruction transmitted from the gateway device 201. In step S1203, the device 202a executes an operation in response to the received operation instruction. In step S1205, the device 202a generates a notification message and transmits the message to the gateway device 201 when there is a necessity to notify a message of the communication terminal 206 due to the operation execution.

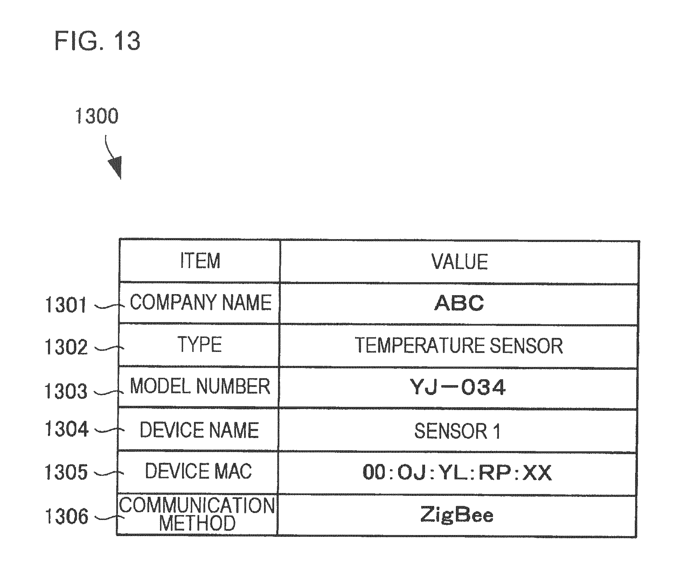

FIG. 13 is a diagram illustrating an example of a table 1300 of information about devices, which table is stored in the gateway device of the present exemplary embodiment.

The table 1300 is just an example, and shows contents of the device information of the device 202a (the temperature sensor in the present exemplary embodiment). The contents are a company name 1301, a type 1302, a model number 1303, a device name 1304, a device MAC 1305, and a communication method 1306. The contents shown in the table 1300 is just an example in the present exemplary embodiment, and the contents of the table are not limited to those. The company name 1301 indicates ABC corporation, which is a manufacturer of the device 202a (temperature sensor). The type 1302 indicates a type of the device 202a (temperature sensor), and indicates the temperature sensor in the present exemplary embodiment. The model number 1303 indicates a model number of the device 202a (temperature sensor) in a manufacturer, and indicates "YJ-034".

The device name 1304 indicates a name of the device 202a (temperature sensor), and indicates the name "sensor 1". The device MAC 1305 indicates a MAC address of the device 202a (temperature sensor), and indicates "00: OJ: YL: RP: XX". The communication method 1306 indicates the communication method of communication between the device 202a (temperature sensor) and the gateway device 201, and indicates that "ZigBee" is used.

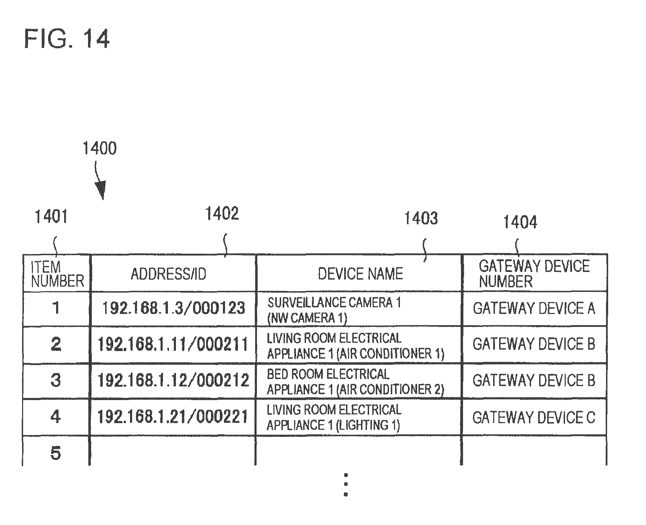

FIG. 14 is a diagram illustrating an example of the table 1400 of the device and address/ID information stored in the device information DB 203a of the present exemplary embodiment.

The table 1400 is just an example, and shows an item number 1401, an address/ID 1402, a device name 1403, and a gateway device number 1404. The contents shown in the table 1400 are just an example in the present exemplary embodiment, and the contents of the table are not limited to those.

The item number 1401 indicates an ID of each piece of device information stored in the device information DB 203a. The address/ID 1402 indicates an address and an ID of each device. For example, the address of the device corresponding to the item number 1 is "192.168.1.3", and the ID thereof is "000123".

Next, the device name 1403 indicates a name of each device. The name is generated in the device name generation unit 201-3 of the gateway device 201, and the device name corresponding to the item number 1 is the "surveillance camera 1 (NW camera 1)". The gateway device number 1404 indicates the number of each gateway device administering the devices. The gateway device administering the device of the item number 1 is the "gateway device A". The gateway device is able to administer a plurality of devices. For example, FIG. 14 shows that the gateway device B administers devices (living room electrical appliance 1 (air conditioner 1), bedroom electrical appliance 1 (air conditioner 2)) which correspond to the item numbers 2 and 3.

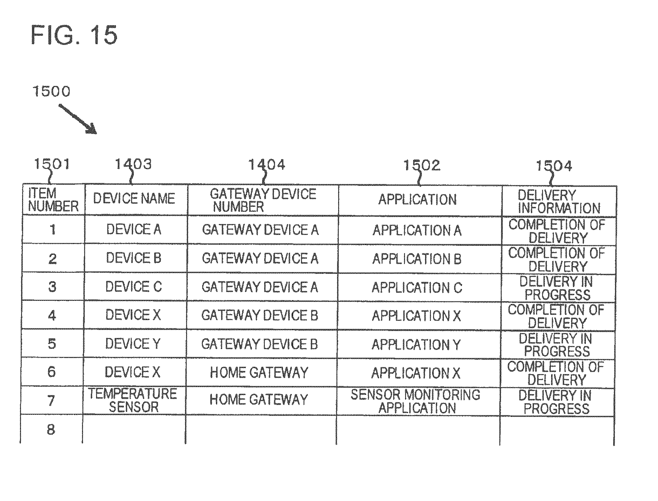

FIG. 15 is a diagram illustrating an example of a table 1500 of the information which is stored in the application registration DB 205a of the present exemplary embodiment and in which the gateway devices and the applications are associated.

The table 1500 is just an example, and shows an item number 1501, a device name 1403, a gateway device number 1404, an application 1502, and delivery information 1504.

The item number 1501 is an ID of each piece of information registered in the table 1500. The device name 1403 and the gateway device number 1404 are the same as the device name 1403 and gateway device number of FIG. 14, respectively. The application 1502 indicates each application for issuing the operation instruction to the device. Specifically, in a gateway device A, software A is used in order to execute the operation of the device corresponding to the item number 1, and software B is used to execute the operation of the device corresponding to the item number 2. Further, an application X is delivered to a gateway device B corresponding to the item number 4 and a home gateway corresponding to the item number 6, and is used to execute the operation of the device. The delivery information 1504 indicates whether or not the delivery of the application 1502 to the gateway device 201 is completed, and indicates that the application A corresponding to the item number 1 has already been delivered to the gateway device A. On the other hand, the information indicates that an application C corresponding to the item number 3 is now being delivered to the gateway device A.

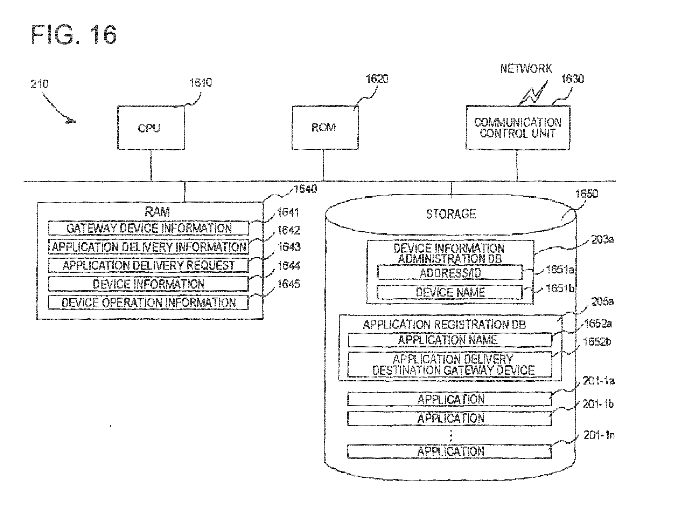

The internal configuration of the information processing device 210 will be described with reference to FIG. 16. The information processing device 210 includes a CPU 1610, a ROM 1620, a communication control unit 1630, a RAM 1640, and a storage 1650. The CPU 1610 is a central processing unit, and controls the entirety of the information processing device 210 by executing various programs. The ROM 1620 is a read-only memory, and stores not only a boot program executed first by the CPU 1610 but also various parameters and the like. Further, the RAM 1640 provides a work area for the CPU 1610. The RAM 1640 stores various pieces of information (gateway device information 1641, application delivery information 1642, application delivery request information 1643, device information 1644, and device operation information 1645). On the other hand, the storage 1650 stores the device information DB 203a, the application registration DB 205a, and the applications 201-1a to 201-1n.

The gateway device information 1641 is information of the application and the gateway device 201 that administers the device using the application, is transmitted from the communication terminal 206, and is stored in the instruction transceiver unit 205. The application delivery information 1642 is information of the application and the gateway device to which the application is delivered, and is transmitted from the application delivery unit 204 to the instruction transceiver unit 205.

The application delivery request information 1643 is information of the request for the application that is used to issue the operation instruction to the device that the gateway device 201 administers in the application delivery unit 204. On the basis of the application delivery request information, the application delivery unit 204 generates the application delivery information 1642. The device information 1644 indicates the address/ID information of the devices, the device names, and the information of the gateway device administering the devices, which are transmitted from the gateway device 201 to the device information storage unit 203. The device operation information 1645 is information about the operation instruction of the device, which is transmitted from the communication terminal 206 and stored in the instruction transceiver unit 205.

The device information DB 203a includes the address/ID information of the devices, the device names, and the information of the gateway device administering the devices. The application registration DB 205a includes the application and the information of the gateway device to which the application is delivered.

With the above-mentioned configuration and operations, according to the communication network system of the present exemplary embodiment, the applications for performing the operation instruction to the devices are integrated into the server. It is therefore possible to prevent the gateway device and the communication terminal from performing direct communication between each other, and thus the security is improved.

### [Third Exemplary Embodiment]

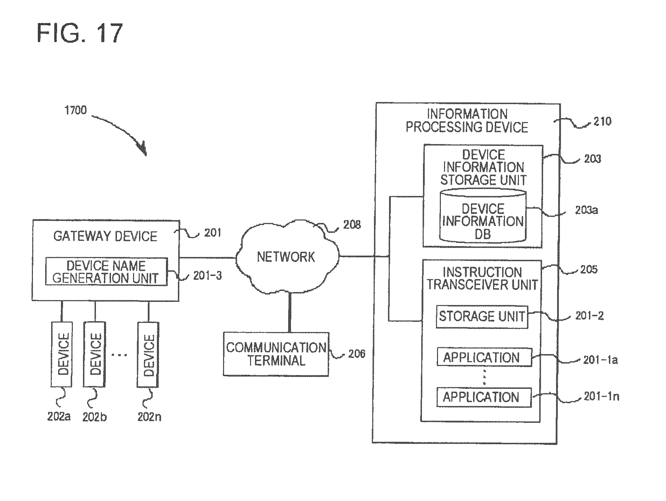

Next, a communication network system 1700 according to a third exemplary embodiment of the present invention will be described with reference to FIG. 17.

FIG. 17 is a diagram illustrating a configuration of the communication network system 1700 according to the present exemplary embodiment. The communication network system 1700 includes the gateway device 201, the devices 202a to 202n, and the information processing device 210. The gateway device 201 includes the device name generation unit 201-3, and is connected with the devices 202a to 202n to be able to communicate with each other. The information processing device 210 includes the device information storage unit 203 and the instruction transceiver unit 205. The instruction transceiver unit 205 includes the storage unit 201-2 and the applications 201-a to 201n. Here, in the present exemplary embodiment, the function of the device administration unit according to Exemplary Embodiment 1 is implemented with, for example, the gateway device 201. In the present exemplary embodiment, the functions of the other functional components in Exemplary Embodiment 1 are implemented with, for example, functional components having the same names.

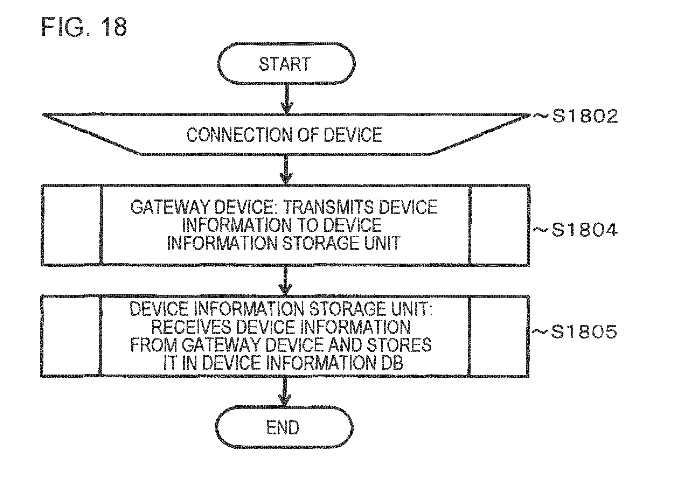

FIG. 18 shows a processing flow in a case where the device 202a is connected to the gateway device 201 in the present exemplary embodiment. First, in step S1802, the device 202a is connected to the gateway device 201. Next, in step S1804, the gateway device transmits the device information to the device information storage unit 203. Here, the gateway device 201 does not store the transmitted device information. Then, in step S1805, the device information storage unit 203 stores the device information, which the device information storage unit 203 receives from the gateway device 201, in the device information DB 203a.

Examples of the transmitted device information include the address/ID of the device, the device name generated by the device name generation unit 201-3, and the gateway device number.

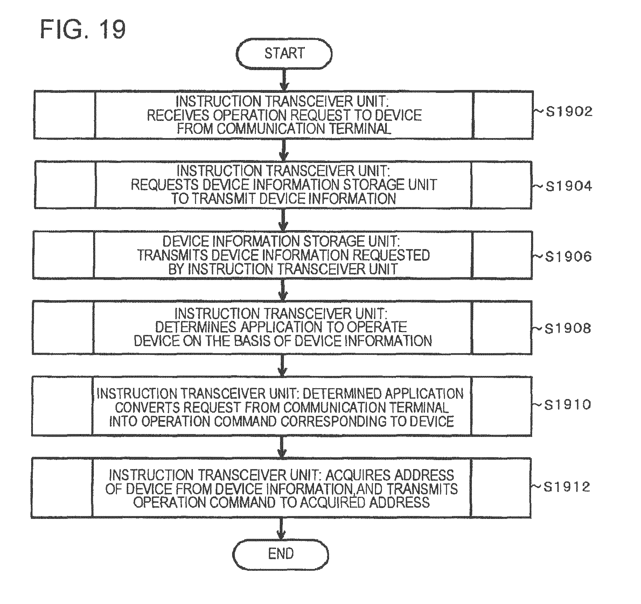

FIG. 19 shows a processing flow in the present exemplary embodiment in a case where the information processing device 210 operates the device on the basis of the device operation instruction that is transmitted by the communication terminal 206. In step S1902, the instruction transceiver unit 205 receives the operation instruction of the device 202a that the communication terminal 206 transmits. Next, in step S1904, the instruction transceiver unit 205 requests the device information storage unit 203 for transmitting the device information on the device 202a. In step S1906, the device information storage unit 203 searches device information DB 203a on the basis of the request from the instruction transceiver unit 205, and transmits the retrieved device information to the instruction transceiver unit 205. In step S1908, the instruction transceiver unit 205 searches the table, which is stored in the storage unit 201-2 and indicates association between the devices and the applications, on the basis of the received device information. As a result, it is determined that the application for operating the device 202a is the application 201-1a. In step S1910, the instruction transceiver unit 205 inputs to the application 201-1a the operation instruction received from the communication terminal 206. Then, the application 201-1a generates an operation command, which can be executed by the device 202a, using the device operation instruction issued by the communication terminal 206. Subsequently, in S1912, the address of the device 202a is determined from the device information, and the generated operation command is transmitted to the device 202a. The device 202a runs in accordance with the instruction from the communication terminal 206 by executing the received operation command.

With the above-mentioned configuration and operations, according to the communication network system of the present exemplary embodiment, the applications for performing the operation instruction to the devices are integrated into the server. It is therefore possible to prevent the gateway device and the communication terminal from performing direct communication between each other, and thus the security is improved. Further, in the present exemplary embodiment, since an application is not delivered to the gateway device 201, even though a malicious user is able to directly connect to the gateway device 201, the user is not able to operate the device. Consequently, in the present exemplary embodiment, the security is further improved.

### [Other Exemplary Embodiment]

The exemplary embodiments of the present invention have been described in detail, but the scope of the present invention involves a system or an apparatus in which various features included in each exemplary embodiment are combined in various ways.

Further, the present invention may be applied to a system that is constituted of a plurality of apparatuses, and may be applied to a single apparatus. Furthermore, the present invention may be applied to a case where an information processing program implementing functions of the exemplary embodiment is directly or remotely supplied to the system or the apparatus. Consequently, the scope of the present invention also includes a computer program that is installed in a computer in order to implement the functions of the present invention in the computer, a storage medium that stores the computer program, and a WWW (World Wide Web) server that enables to download the computer program.

### [Other Representation of Exemplary Embodiment]

A part or the entirety of the present exemplary embodiment may be noted as the following appendixes, but is not limited to the following appendixes.

### (Appendix 1)

A communication network system including:
a device administration unit that is connected to at least one device in a communicable fashion;
a device information storage unit that receives device information about the device from the device administration unit through a network and stores the device information;
an application delivery unit that delivers an application, which issues an instruction for operating the device, to the device administration unit through the network on the basis of a request from the device administration unit; and
an instruction transceiver unit that receives the instruction for operating the device from a communication unit through the network, and transmits the instruction to the device administration unit,
wherein the instruction transceiver unit determines the device to which the operation instruction is transmitted, on the basis of the device information acquired from the device information storage unit,
wherein the instruction transceiver unit determines the device administration unit that transmits the instruction for operating the device, on the basis of information about the device administration unit that is a delivery destination of the application acquired from the application delivery unit,
wherein the instruction transceiver unit transmits the operation instruction to the application delivered to the determined device administration unit, and
wherein the application delivered to the determined device administration unit that receives the operation instruction operates the determined device on the basis of the operation instruction.

### (Appendix 2)

The communication network system according to Appendix 1, wherein the device administration unit retrieves the application for operating the device on the basis of the device information acquired from the at least one device, and requests the application delivery unit for delivering the retrieved application.

### (Appendix 3)

The communication network system according to Appendix 1 or 2, wherein the device administration unit administers an address/ID of the device and a device name generated by the device administration unit, as information on the device.

### (Appendix 4)

The communication network system according to any one of Appendixes 1 to 3, wherein the device information storage unit stores, as the information about the device, the address/ID of the device, the device name, and the device administration unit.

### (Appendix 5)

The communication network system according to any one of Appendixes 1 to 4, wherein the instruction transceiver unit acquires from the application delivery unit the information about the device administration unit to which the application is delivered, and transmits the information to the device information storage unit.

### (Appendix 6)

The communication network system according to any one of Appendixes 1 to 5, wherein the instruction transceiver unit further includes an application registration unit that registers information about the application acquired from the application delivery unit.

### (Appendix 7)

The communication network system according to any one of Appendixes 1 to 6, wherein the instruction transceiver unit stores, as the information about the device administration unit, information about the device administration unit administering the device, and information about the application for issuing the instruction to operate the device.

### (Appendix 8)

The communication network system according to any one of Appendixes 1 to 7, wherein the communication unit transmits to the instruction transceiver unit the information about the device administration unit to which the application is delivered.

### (Appendix 9)

The communication network system according to any one of Appendixes 1 to 8, wherein the application operates the device by generating an operation command, which is executable by the device, on the basis of the operation instruction and causing the device to execute the generated operation command.

### (Appendix 10)

A communication method comprising:
a device administration step that is connected with at least one device in a communicable fashion;
an application delivery step that receives device information about the device, and delivers an application which issues an instruction for operating the device; and
an instruction transceiver step that receives the instruction for operating the device from a communication unit, and transmits the instruction for operating the device on the basis of the device information and the information about a delivery destination of the application.

### (Appendix 11)

An information processing apparatus including:
an instruction reception unit that receives an instruction for operating a device from a communication unit through a network;
a device information reception unit that receives the device information from a device information storage unit that stores device information about the device; and
an application delivery information reception unit that receives from an application delivery unit application delivery information that indicates an application, which issues the instruction for operating the device, has been delivered to a device administration unit administering the device,
wherein the instruction for operating the device is transmitted to the device administration unit on the basis of the instruction, the device information, and the application delivery information.

### (Appendix 12)

A communication network system including:
a device administration unit that is connected to at least one device in a communicable fashion device;
a device information storage unit that receives device information about the device from the device administration unit through a network and stores the device information; and
an instruction transceiver unit that receives the instruction for operating the device from a communication unit through the network, and transmits the instruction to the device administration unit,
wherein the instruction transceiver unit has an application that transmits the operation instruction to the device administration unit,
wherein the instruction transceiver unit determines the device to which the operation instruction is transmitted and the device administration unit that administers the device, on the basis of the device information acquired from the device information storage unit,
wherein the instruction transceiver unit transmits the operation instruction to the determined device administration unit by using the application,
wherein the device administration unit receives the operation instruction, and
wherein the device administration unit operates the device in accordance with the received operation instruction.

### (Appendix 13)

The communication network system according to Appendix 12, wherein the device administration unit administers an address/ID of the device, a device name generated by the device administration unit, and an ID of the device administration unit, as information about the device.

### (Appendix 14)

The communication network system according to Appendix 12 or 13, wherein the instruction transceiver unit stores information about the device administration unit administering the device and information about the application for issuing the instruction to operate the device, as the information about the device administration unit.

### (Appendix 15)

The communication network system according to any one of Appendixes 12 to 14,
wherein the application generates an operation command that is executable by the device, on the basis of the operation instruction,
wherein the application transmits the generated operation command to the device administration unit, and
wherein the device administration unit operates the device by receiving the operation command and causing the device to execute the operation command.

This application claims the benefit of priority to the Japanese Patent Application No. 2011-147698 filed on July 1, 2011, and the entire contents of the application are incorporated herein by reference.

## Claims

1. A communication network system comprising:
a device administration unit that is connected to at least one device in a communicable fashion;
a device information storage unit that receives device information about the device from the device administration unit through a network and stores the device information;
an application delivery unit that delivers an application, which issues an instruction for operating the device, to the device administration unit through the network on the basis of a request from the device administration unit; and
an instruction transceiver unit that receives the instruction for operating the device from a communication unit through the network, and transmits the instruction to the device administration unit,
wherein the instruction transceiver unit determines the device to which the operation instruction is transmitted, on the basis of the device information acquired from the device information storage unit,
wherein the instruction transceiver unit determines the device administration unit that transmits the instruction for operating the device, on the basis of information about the device administration unit that is a delivery destination of the application acquired from the application delivery unit,
wherein the instruction transceiver unit transmits the operation instruction to the application delivered to the determined device administration unit, and
wherein the application delivered to the determined device administration unit that receives the operation instruction operates the determined device on the basis of the operation instruction.

2. The communication network system according to claim 1, wherein the device administration unit retrieves the application for operating the device on the basis of the device information acquired from the at least one device, and requests the application delivery unit for delivering the retrieved application.

3. The communication network system according to claim 1 or 2, wherein the device administration unit administers an address/ID of the device and a device name generated by the device administration unit, as information on the device.

4. The communication network system according to any one of claims 1 to 3, wherein the device information storage unit stores, as the information about the device, the address/ID of the device, the device name, and the device administration unit.

5. The communication network system according to any one of claims 1 to 4, wherein the instruction transceiver unit acquires from the application delivery unit the information about the device administration unit to which the application is delivered, and transmits the information to the device information storage unit.

6. The communication network system according to any one of claims 1 to 5, wherein the instruction transceiver unit further includes an application registration unit that registers information about the application acquired from the application delivery unit.

7. The communication network system according to any one of claims 1 to 6, wherein the instruction transceiver unit stores, as the information about the device administration unit, information about the device administration unit administering the device, and information about the application for issuing the instruction to operate the device.

8. The communication network system according to any one of claims 1 to 7, wherein the communication unit transmits to the instruction transmission reception unit the information about the device administration unit to which the application is delivered.

9. A communication method comprising:
a device administration step that is connected to at least one device in a communicable fashion;
an application delivery step that receives device information about the device, and delivering an application which issues an instruction for operating the device; and
an instruction transceiver step that receives the instruction for operating the device from a communication unit, and transmits the instruction for operating the device on the basis of the device information and the information about a delivery destination of the application.

10. An information processing apparatus comprising:
an instruction reception unit that receives an instruction for operating a device from a communication unit through a network;
a device information reception unit that receives the device information from a device information storage unit that stores device information about the device; and
an application delivery information reception unit that receives from an application delivery unit application delivery information that indicates an application, which issues the instruction for operating the device, has been delivered to a device administration unit administering the device,
wherein the instruction for operating the device is transmitted to the device administration unit on the basis of the instruction, the device information, and the application delivery information.
